# EUROPÄISCHE PATENTSCHRIFT

(11) **EP 1 049 527 B1**
(45) Veröffentlichungstag und Bekanntmachung des Hinweises auf die Patenterteilung: **02.05.2002**
(21) Anmeldenummer: 98966400.8
(22) Anmeldetag: 23.12.1998
(51) Int. Cl.: B01D 46/06, B01D 46/02, B01D 46/42

(54) **FILTERBEUTEL FÜR TASCHENLUFTFILTER UND VERFAHREN ZU DESSEN HERSTELLUNG**
FILTER BAG FOR A POCKET AIR FILTER AND METHOD FOR THE PRODUCTION THEREOF
SAC FILTRANT POUR FILTRE A AIR DU TYPE POCHE ET SON PROCEDE DE FABRICATION

(30) Priorität: 22.01.1998 DE 29800969 U
(43) Veröffentlichungstag der Anmeldung: 08.11.2000
(73) Patentinhaber: Kluge, Klaus, 63225 Langen (DE)
(72) Erfinder: Kluge, Klaus, 63225 Langen (DE)
(74) Vertreter: Katscher, Helmut, Dipl.-Ing.
(86) Internationale Anmeldenummer: EP9808422
(87) Internationale Veröffentlichungsnummer: WO9937385

(56) Entgegenhaltungen:
- EP-A- 0 082 106
- EP-A- 0 666 096
- DE-A- 2 353 243
- DE-A- 2 411 697
- DE-A- 2 541 331
- DE-A- 2 932 365
- DE-A- 3 615 484
- DE-U- 9 409 639
- US-A- 3 247 813

## Beschreibung

Die Erfindung betrifft einen Filterbeutel für Taschenluftfilter, bestehend aus zwei an ihren beiden Seitenrändern und ihrem Bodenrand miteinander verschweißten Seitenwänden aus luftdurchlässigem, durch Ultaschall schweißbarem Filtermaterial, die mindestens auf einem Teil ihrer Fläche durch eingeschweißte, im wesentlichen parallel zu den Seitenrändern verlaufende Abstandsstege miteinander verbunden sind.

Derartige Filterbeutel werden üblicherweise im Abstand nebeneinander angeordnet, um ein Taschenluftfilter zu bilden. Um eine optimale Ausnutzung der Filterschicht zu erreichen, wird eine möglichst gleichmäßige Durchströmung in allen Bereichen der Filterschicht angestrebt, um die Durchströmungsgeschwindigkeit gering zu halten. Hierzu ist es bei Taschenluftfiltern erforderlich, die Seitenwände jedes einzelnen Filterbeutels in einem optimalen Abstand zueinander zu halten, weil nur so auch ein optimaler Abstand zu benachbarten Filterbeuteln eingehalten werden kann.

Bei Filterbeuteln aus vorzugsweise nicht schweißbarem Filtermaterial wird dies durch Abstandhalternähte erreicht, die nachträglich mit Heißkleber abgedichtet werden müssen. Dieses Nähverfahren, das auch für schweißbare Filtermaterialien angewandt wird, hat jedoch den Nachteil, daß die erforderliche Abdichtung der Nählöcher teilweise unvollständig erfolgt. Außerdem kann die Perforation des Filtermaterials bei unzureichender Verklebung teilweise zum Einreißen entlang der Nähte führen.

Um eine zuverlässige Abdichtung der Filterbeutel zu erreichen und ein Einreißen zu vermeiden, ist es bei einem Filterbeutel der eingangs genannten Gattung (EP-A-0 666 096) bekannt, zur Bildung der mit den beiden Seitenwänden verbundenen Abstandsstege aus flexiblem Material bestehende Röhren mit den beiden Filterseitenflächen zu verschweißen. Der hierfür erforderliche Arbeitsaufwand ist im Vergleich zum Nähverfahren verhältnismäßig hoch und kostspielig, zumal auch die Abstandsstege wegen ihrer Herstellung aus Röhren jeweils doppelwandig sind.

Aufgabe der Erfindung ist es daher, einen Filterbeutel der eingangs genannten Gattung zu schaffen, der von einfachem Aufbau ist und mit geringem Arbeits- und Materialaufwand hergestellt werden kann. Dabei soll eine optimale Konfiguration des Filterbeutels im Betriebszustand sichergestellt sein, um die Einhaltung eines optimalen Abstands der beiden Seitenwände sicherzustellen.

Diese Aufgabe wird erfindungsgemäß dadurch gelöst, daß die Abstandsstege durch eine aus einer flexiblen Materialbahn bestehende Zwischenlage gebildet werden, die abwechselnd mit jeweils einer der beiden Seitenwände verschweßt ist.

Durch diese abwechselnde Verschweißung mit der einen und der anderen Seitenwand wird erreicht, daß die Zwischenlage im Betriebszustand des Filterbeutels eine zickzackförmige Gestaltung annimmt. Dadurch werden die beiden Seitenwände zuverlässig auf den vorgegebenen, optimalen gegenseitigen Abstand gehalten, wobei der jeweils diagonale Verlauf der durch die zickzackförmige Zwischenlage gebildeten Abstandsstege auch eine sehr wirksame Stabilisierung der beiden Seitenwände gegen eine Relativverschiebung bewirkt. Dadurch wird es möglich, die Anzahl der nebeneinander angeordneten einzelnen Filterbeutel innerhalb der vorgegebenen Rasterbreite von Taschenluftfiltern (bisher max. 12 Filterbeutel auf eine Breite von 592 mm) deutlich zu erhöhen. Dadurch ergibt sich der Vorteil größerer Staubspeicherfähigkeit und längerer Standzeit.

Die Herstellung des Filterbeutels wird wesentlich vereinfacht, weil anstelle von einzelnen, jeweils einzeln einzubringenden und zu verschweißenden, beispielsweise röhrenförmigen Abstandsstegen nur eine zusammenhängende Zwischenlage eingebracht und abwechselnd mit der einen und der anderen Seitenwand durch Ultraschallschweißung verbunden wird. Der Filterbeutel ist daher einfach und kostengünstig herzustellen; er ist von einfachem Aufbau und ergibt eine optimale Konfiguration der Filterflächen, die auf einen optimalen gegenseitigen Abstand gehalten werden, so daß eine freie Abströmung bei mehreren parallel und möglichst dicht nebeneinander angeordneten Filterbeuteln gewährleistet ist.

Vorzugsweise ist die Zwischenlage an im wesentlichen parallel zu den Seitenrändern verlaufenden, durch Ultraschallschweißung hergestellten Schweißnähten abwechselnd mit der einen und der anderen Seitenwand verbunden.

Gemäß einer bevorzugten Ausführungsform der Erfindung ist vorgesehen, daß die Zwischenlage aus einer einstückigen Materialbahn besteht und mit den beiden Seitenrändern der beiden Seitenwände verschweißt ist. Dadurch erstreckt sich die Zwischenlage durchgehend von dem einen Seitenrand zum anderen Seitenrand des Filterbeutels. Dies trägt zur Stabilisierung des Filterbeutels bei und vereinfacht die Herstellung.

Vorzugsweise sind benachbarte Schweißnähte der Zwischenlage in jeweils gleichem Abstand zueinander angeordnet. Dadurch ergibt sich ein im wesentlichen gleicher Aufbau über die gesamte Breite des Filterbeutels.

Gemäß einer bevorzugten Ausführungsform des Filterbeutels ist vorgesehen, daß die Zwischenlage im Abstand zum Bodenrand angeordnet ist und daß die beiden Seitenwände im Bereich zwischen dem Bodenrand und der Zwischenlage durch im wesentlichen parallel zu den Seitenrändern verlaufende Schweißnähte unmittelbar miteinander verbunden sind. Dadurch verjüngt sich der Filterbeutel von seiner Zuströmöffnung zum Bodenrand hin, so daß eine weitgehende gleichmäßige Durchströmung über die gesamte Tiefe des Filterbeutels sichergestellt ist.

Die Erfindung betrifft darüber hinaus ein vorteilhaftes Verfahren zur Herstellung derartiger Filterbeutel. Ausgehend von einem bekannten Verfahren, bei dem zwei Lagen von Filtermaterial an ihren beiden Seitenrändern und einem Bodenrand miteinander durch Ultraschall verschweißt werden und mit dazwischen angeordneten Abstandsstegen durch Ultraschall verschweißt werden, ist das erfindungsgemäße Verfahren dadurch gekennzeichnet, daß zwei endlos zugeführte Bahnen von Filtermaterial an quer zur Bahnlängsrichtung verlaufenden, aufeinanderfolgenden Schweißnähten abwechselnd mit einer dazwischen endlos zugeführten Zwischenlagenbahn verschweißt werden, wobei die Ultraschallschweißung jeweils durch die beiden Bahnen von Filtermaterial und durch die Zwischenlagebahn hindurch erfolgt und in aufeinanderfolgenden Schweißvorgängen abwechselnd zwischen die Zwischenlagebahn und die eine bzw. die andere Bahn von Filtermaterial jeweils eine nichtverschweißbare Trennplatte eingeschoben wird.

Hierdurch wird erstmals ein kontinuierlicher Herstellungsvorgang ermöglicht, der besonders rasch, einfach und daher kostengünstig durchzuführen ist. Anstelle des umständlichen und arbeitsaufwendigen Einlegens von Trennplatten von Hand werden die jeweils zwischen der Zwischenlage und jeder der beiden Bahnen von Filtermaterial angeordneten Trennplatten je nach Bedarf in den Schweißbereich vorgeschoben, wenn an dieser Stelle die Verschweißung der aufeinanderliegenden Schichten unterbleiben soll. Auf diese Weise ist es fertigungstechnisch sehr einfach, die Zwischenlagebahn abwechselnd mit der einen und der anderen, jeweils eine Seitenwand bildenden Bahn von Filtermaterial zu verschweißen.

Gemäß einer bevorzugten Ausführungsform der Erfindung ist vorgesehen, daß die beiden Trennplatten als quer zur Bahnlängsrichtung verlaufende Trennstreifen ausgeführt sind, die abwechselnd in Bahnlaufrichtung in den Schweißbereich und in entgegengesetzter Richtung aus diesem heraus bewegt werden. Die Trennstreifen müssen hierbei jeweils nur sehr kurze Bewegungshübe ausführen, so daß ein verhältnismäßig schneller Arbeitsablauf gewährleistet ist.

Beim Verschweißen der Seitenränder verbleiben die beiden Trennplatten bzw. Trennstreifen in einer aus dem Schweißbereich zurückgezogenen Stellung, so daß an den Seitenrändern die beiden Seitenwände mit der Zwischenlage verschweißt werden.

Die beiden Bahnen von Filtermaterial und die Zwischenlagebahn können in gesteuerten Vorschubschritten einer Schweißstation zugeführt werden, in der mindestens ein sich quer zur Bahnlängsrichtung erstreckender Ultraschall-Schweißkopf gegenüber einer Schweißgegenfläche angeordnet ist. Damit reicht eine einzige Schweißstation aus, um nacheinander im Arbeitsbereich der Ultraschall-Schweißköpfe (Sonotroden)alle querverlaufenden Schweißungen an einem Filterbeutel auszuführen.

Vorzugsweise sind in der Schweißstation mehrere, in Bahnquerrichtung nebeneinander angeordnete Schweißköpfe gesondert ansteuerbar. Dadurch ist es möglich, auch unterschiedlich lange Schweißnähte auszuführen, insbesondere auch die unmittelbar Verschweißung der beiden Seitenwände im Bereich nahe am Bodenrand des Filterbeutels.

Nachfolgend werden Ausführungsbeispiele der Erfindung näher erläutert, die in der Zeichnung dargestellt sind. Es zeigt:
Fig. 1 in schematischer räumlicher Darstellungsweise einen Filterbeutel für ein Taschenluftfilter, teilweise aufgebrochen dargestellt,
Fig. 2 ein Taschenluftfilter, das aus mehreren Filterbeuteln gemäß Fig. 1 besteht,
Fig. 3 eine Draufsicht auf einen Filterbeutel gemäß Fig. 1,
Fig. 4 einen Schnitt längs der Linie IV-IV durch den Filterbeutel nach Fig. 3 im Betriebszustand,
Fig. 5 in vereinfachter schematischer räumlicher Darstellung eine Vorrichtung zur Herstellung eines Filterbeutels nach Fig. 1,
Fig. 6-9 in schematischer Darstellung aufeinanderfolgende Verfahrensschritte beim Herstellen eines Filterbeutels auf einer Vorrichtung nach Fig. 5,

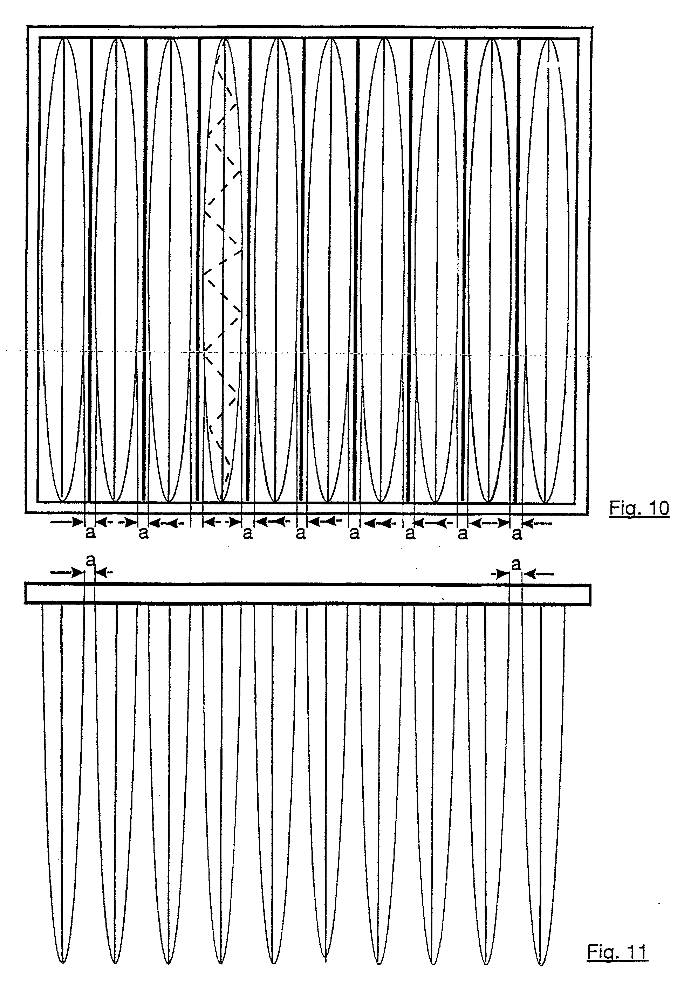

Fig. 10 eine Ansicht des Taschenluftfilters nach Fig. 2 von der Rückseite und
Fig. 11 eine Ansicht des Taschenluftfilters nach Fig. 10 in einer Draufsicht.

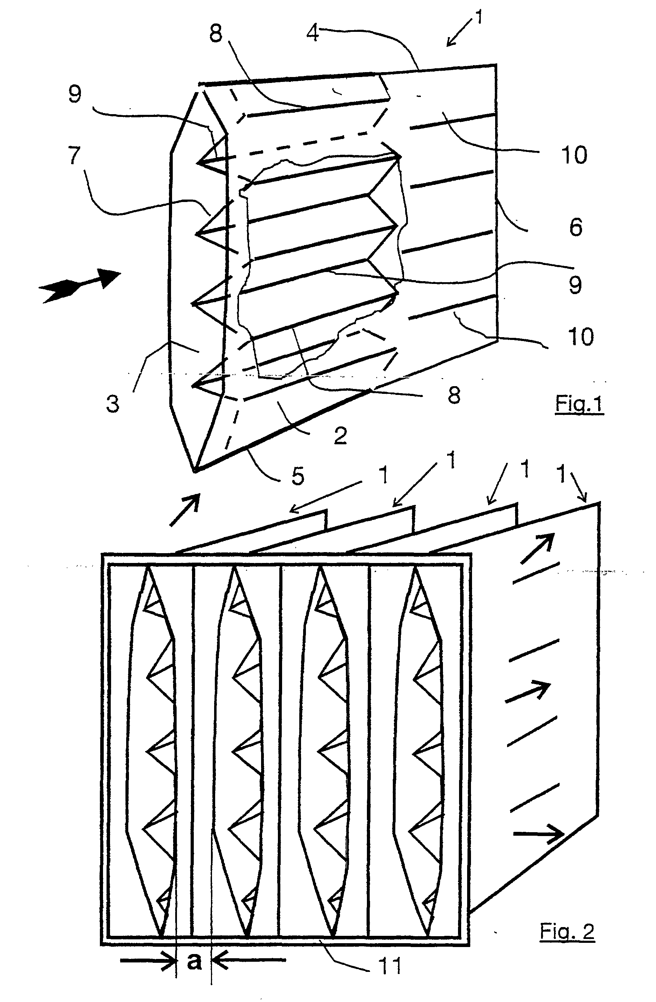

Der in den Fig. 1, 3 und 4 dargestellte Filterbeutel 1 weist zwei Seitenwände 2, 3 aus luftdurchlässigem Filtermaterial auf, das durch Ultraschall verschweißbar ist. Die beiden Seitenwände 2, 3 sind an ihren beiden Seitenrändern 4, 5 und an ihrem Bodenrand 6 miteinander durch Ultraschallschweißung verbunden.

Eine aus einer flexiblen Materialbahn bestehende Zwischenlage 7 ist im Querschnitt des Filterbeutels 1 zickzackförmig zwischen den beiden Seitenwänden 2, 3 angeordnet und mit diesen zur Bildung von Abstandsstegen verbunden. Die Zwischenlage 7 ist an Ultraschall-Schweißnähten 8 bzw. 9 abwechselnd mit der Seitenwand 2 bzw. der Seitenwand 3 verbunden. Die Schweißnähte 8, 9 verlaufen im wesentlichen parallel zu den Seitenrändern 4, 5.

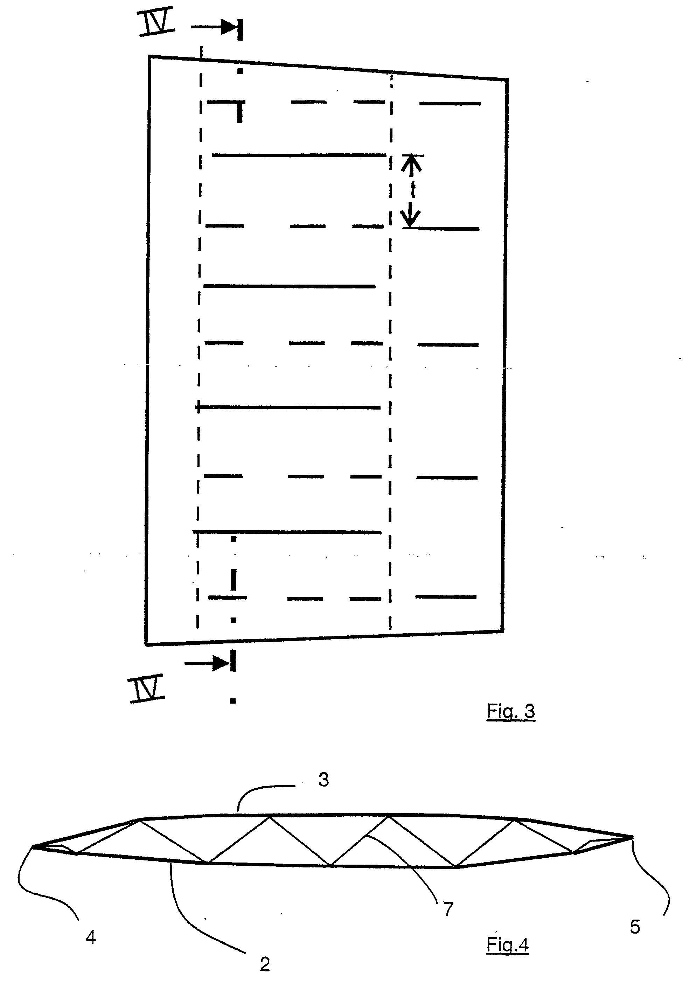

Wie man aus Fig. 4 erkennt, besteht die Zwischenlage 7 aus einer einstückigen Materialbahn, die mit den beiden Seitenrändern 4 und 5 der miteinander verbundenen Seitenwände 2 und 3 verschweißt ist. Wie Fig. 3 zeigt, sind bei dem dargestellten Ausführungsbeispiel die jeweils benachbarten Schweißnähte 8 bzw. 9 der Zwischenlage 7 in jeweils gleichem Abstand t zueinander angeordnet.

Wie man aus den Fig. 1 und 3 erkennt, ist die Zwischenlage 7 im Abstand zum Bodenrand 6 angeordnet. Im Bereich zwischen dem Bodenrand 6 und der Zwischenlage 7 sind die beiden Seitenwände 2, 3 durch Schweißnähte 10 unmittelbar miteinander verbunden. Auch diese Schweißnähte 10 verlaufen im wesentlichen parallel zu den Seitenrändern 4 und 5.

Wie in Fig. 2 gezeigt, sind mehrere, beim dargestellten Ausführungsbeispiel vier Filterbeutel 1 in einem Rahmen 11 zu einem Taschenluftfilter zusammengefaßt. Die jeweils durch die Zwischenlage 7 gebildeten Abstandsstege in den einzelnen Filterbeuteln 1 halten jeweils die beiden Seitenwände 2, 3 im Betriebszustand, d.h. beim Durchströmen von Luft, auf einem vorgegebenen gegenseitigen Abstand. Dadurch läßt sich im Taschenluftfilter ein vorgegebener gleichmäßiger Abstand a zwischen benachbarten Filterbeuteln 1 einhalten, wodurch eine gleichmäßige und unbehinderte Luftabströmung gewährleistet ist.

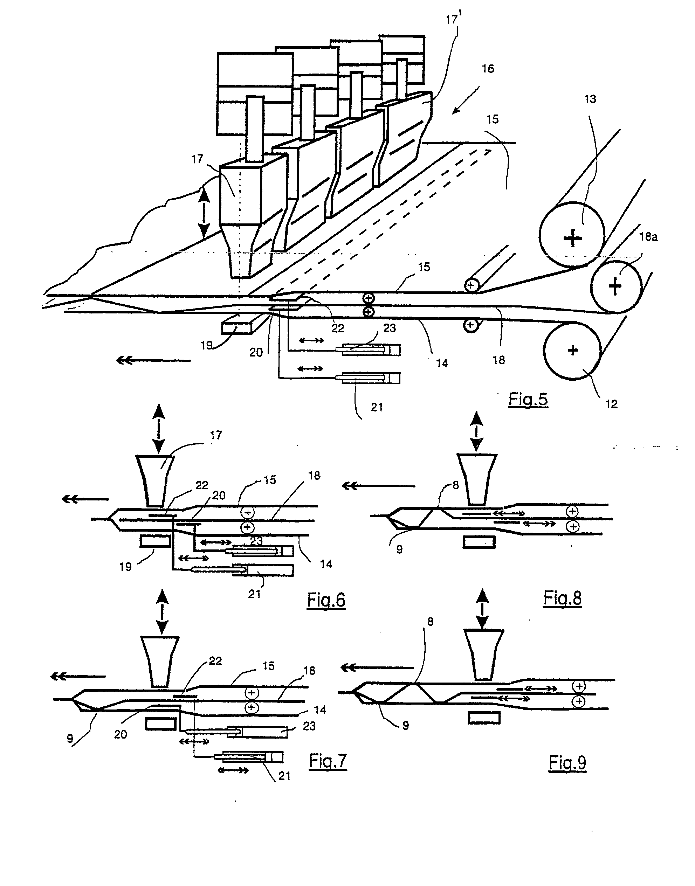

Das Verfahren zu Herstellung der Filterbeutel 1 wird nachfolgend anhand der Fig. 5-9 beschrieben.

Von Rollen 12 und 13 (Fig. 5) wird jeweils eine endlose Bahn 14 bzw. 15 von Filtermaterial abgezogen und einer Schweißstation 16 zugeführt. Zugleich wird von einer Rolle 18a eine endlose Zwischenlagebahn 18 abgezogen und zwischen den beiden Bahnen 14 und 15 ebenfalls der Schweißstation 16 zugeführt.

In der Schweißstation 16 sind mehrere als Ultraschallwerkzeuge (Sonotroden) ausgeführte Schweißköpfe 17 in Bahnquerrichtung nebeneinander über der oberen Bahn 15 angeordnet. Jeder der Schweißköpfe 17 ist gesondert ansteuerbar. Eine Schweißgegenfläche 19 ist den Schweißköpfen 17 gegenüberliegend unterhalb der unteren Bahn 14 angeordnet. Beim Schweißvorgang wird das zu schweißende Material gegen die Schweißgegenfläche 19 gepreßt und es wird eine Ultraschallwirkung auf das zu verschweißende Material ausgeübt.

Ein erster Trennstreifen 20 ist zwischen der Zwischenlage 18 und der unteren Bahn 14 unmittelbar vor dem Einlauf in die Schweißstation 16 angeordnet. Der Trennstreifen 20 ist an einem Ende mit einem druckmittelbetätigten doppelseitig wirkenden Vorschubzylinder 21 verbunden (in Fig. 5 nur schematisch angedeutet).

In entsprechender Weise ist ein zweiter Trennstreifen 22 zwischen der Zwischenlage 18 und der oberen Bahn 15 unmittelbar vor der Schweißstation 16 angeordnet. Dieser zweite Trennstreifen 22 ist ebenfalls an seinem Ende mit einem doppelseitig wirkenden Vorschubzylinder 23 verbunden (in Fig. 5 nur schematisch angedeutet).

Beide Trennstreifen 20, 22 können durch Ansteuerung ihrer Vorschubzylinder 21 bzw. 23 wahlweise in den Schweißbereich zwischen den Schweißköpfen 17 und der Schweißgegenfläche 19 der Schweißstation 16 in Bahnlaufrichtung eingeschoben und in entgegengesetzter Richtung wieder zurückgezogen werden. Die Trennstreifen 20 und 22 bestehen aus einem Material (beispielsweise PTFE), das im Arbeitsbereich der Sonotroden je nach Einschubposition die Verschweißung der Bahn 14 mit der Zwischenlagebahn 18 bzw. der Bahn 15 mit der Zwischenlagebahn 18 verhindert. Die Trennstreifen 20, 22 sind mit der Zwischenlagebahn 18 und mit den Bahnen 14, 15 nicht verschweißbar und müssen so dimensioniert werden, daß die für die Schweißung erforderliche Ultraschallwirkung durch die Trennstreifen 20, 22 hindurch übertragen wird.

Wenn in der in Fig. 5 gezeigten Stellung die Schweißköpfe 17 betätigt werden, wobei sich beide Trennstreifen 20, 22 außerhalb der Schweißstation 16 befinden, werden alle drei Lagen 14, 15 und 18 zur Bildung einer Verschweißung am Seitenrand 4 miteinander verschweißt. Sodann werden die Bahnen 14, 15 und 18 nach dem Öffnen der Schweißstation 16 gemeinsam um einen dem Abstand t (Fig. 3) entsprechenden, gesteuerten Vorschubschritt nach links in Fig. 5 weiterbewegt. Zugleich wird der obere Trennstreifen 22 durch Ansteuerung der Vorschubzylinders 23 in den Bereich zwischen den Schweißköpfen 17 und der Schweißgegenfläche 19 vorgeschoben, wie in Fig. 6 gezeigt ist.

Bei dem in dieser Stellung ausgeführten Schweißvorgang wird die Zwischenlagebahn 18 nur mit der unteren Bahn 14 von Filtermaterial verschweißt, während der Trennstreifen 22 eine Verschweißung zwischen der Zwischenlagebahn 18 und der oberen Bahn 15 von Filtermaterial verhindert. An dieser Stelle entsteht somit eine Schweißnaht 9, wie bei Fig. 1 beschrieben.

Nach einem erneuten Vorschubschritt der Bahnen 14, 15 und 18 um einen Weg t wird vor dem nächsten Schweißvorgang der erste Trennstreifen 20 durch Ansteuerung seines Vorschubzylinders 21 in den Schweißbereich vorgeschoben, während zugleich der zweite Trennstreifen 22 in entgegengesetzter Richtung zurückgezogen wird. Beim nachfolgenden Schweißvorgang (Fig. 7) erfolgt nur eine Verschweißung der Zwischenlagebahn 18 mit der oberen Bahn 15; es wird somit eine Schweißnaht 8 gebildet.

Die Fig. 8 und 9 zeigen die nachfolgenden Verfahrensschritte, wobei die in Fig. 8 gezeigte Stellung der Stellung nach Fig. 6 und die in Fig. 9 gezeigte Stellung der Stellung nach Fig. 7 entsprechen.

Nach mehreren Schweißzyklen, bei denen abwechselnd die Schweißnähte 8 und 9 gebildet werden, werden schließlich wieder alle drei Bahnen 14, 15 und 18 zur Bildung des zweiten verschweißten Seitenrandes 5 miteinander verschweißt. Die so gebildeten Filterbeutel können entlang der Schweißnähte für die Seitenränder 4 und 5 voneinander getrennt werden.

Die Schweißung am Bodenrand 6 kann durch eine (nicht dargestellte) Rollenschweißstation kontinuierlich bei dem Vorschub der Bahnen 14, 15 und 18 erfolgen.

Bei dem in Fig. 5 gezeigten Beispiel liegt die hinterste Schweißkopf 17' außerhalb des Bereichs der Zwischenlagebahn 18. Durch Ansteuerung dieses Schweißkopfes 17' können gleichzeitig mit den Schweißnähten 9 auch die Schweißnähte 10 im Bereich nahe dem Bodenrand 6 erfolgen. Die Position der Schweißnähte 10 kann grundsätzlich unabhängig von der Position der Schweißnähte 8 und 9 gewählt werden.

In entsprechender Weise kann durch Steuerung der vorgegebenen Positionierabstände, der Trennstreifen 20, 22 und der Schweißköpfe 17 bzw. 17' die jeweils gewünschte Konfigeration eines Filterbeutels geschweißt werden, der als Abstandsstege eine zickzackförmige Zwischenbahn 7 enthält. Es sind auch mehrere nebeneinander angeordnete Zwischenbahnen nach diesem Prinzip schweißbar, wodurch unterschiedliche Abstände der Seitenwände 2, 3 erzeugt werden können, indem die Anzahl der Schweißnähte für jede Zwischenlage unterschiedlich gewählt wird. Durch die Anzahl und Anordnung der den Schweißnähten 10 entsprechenden Abschweißungen ohne Einzug einer Zwischenlage kann eine Optimierung der Filterbeutelgeometrie vorgenommen werden, die zu einer optimalen Reduzierung des Strömungswiderstandes im Betriebszustand führt.

## Patentansprüche

1. Filterbeutel (1) für Taschenluftfilter, bestehend aus zwei an ihren beiden Seitenrändern (4, 5) und ihrem Bodenrand (6) miteinander verschweißten Seitenwänden (2, 3) aus luftdurchlässigem, durch Ultraschall schweißbarem Filtermaterial, die mindestens auf einem Teil ihrer Fläche durch eingeschweißte, im wesentlichen parallel zu den Seitenwänden (2, 3) verlaufende Abstandsstege miteinander verbunden sind, **dadurch gekennzeichnet, daß** die Abstandsstege durch eine aus einer flexiblen Materialbahn bestehende Zwischenlage (7) gebildet werden, die abwechselnd mit jeweils einer der beiden Seitenwände (2 bzw. 3) verschweißt ist.

2. Filterbeutel nach Anspruch 1, **dadurch gekennzeichnet, daß** die Zwischenlage (7) an im wesentlichen parallel zu den Seitenrändern (4, 5) verlaufenden, durch Ultraschallschweißung hergestellten Schweißnähten (8 bzw. 9) abwechselnd mit der einen und der anderen Seitenwand (2 bzw. 3) verbunden ist.

3. Filterbeutel nach Anspruch 1, **dadurch gekennzeichnet, daß** die Zwischenlage (7) mit den beiden Seitenrändern (4, 5) der beiden Seitenwände (2, 3) verschweißt ist.

4. Filterbeutel nach Anspruch 2, **dadurch gekennzeichnet, daß** benachbarte Schweißnähte (8, 9) der Zwischenlage (7) in jeweils gleichem Abstand (t) zueinander angeordnet sind.

5. Filterbeutel nach Anspruch 1, **dadurch gekennzeichnet, daß** die Zwischenlage (7) im Abstand zum Bodenrand (6) angeordnet ist und daß die beiden Seitenwände (2, 3) im Bereich zwischen dem Bodenrand (6) und der Zwischenlage (17) durch im wesentlichen parallel zu den Seitenrändern (4, 5) verlaufende Schweißnähte (10) unmittelbar miteinander verbunden sind.

6. Verfahren zur Herstellung von Filterbeuteln nach einem der Ansprüche 1-5, wobei zwei Lagen von Filtermaterial an ihren beiden Seitenrändern (4, 5) und einem Bodenrand (6) miteinander durch Ultraschall verschweißt werden und mit dazwischen angeordneten Abstandsstegen durch Ultraschall verschweißt werden, **dadurch gekennzeichnet, daß** zwei endlos zugeführte Bahnen (14, 15) von Filtermaterial an quer zur Bahnlängsrichtung verlaufenden, aufeinanderfolgenden Schweißnähten (8, 9) abwechselnd mit einer dazwischen endlos zugeführten Zwischenlagebahn (18) verschweißt werden, wobei die Ultraschallschweißung jeweils durch die beiden Bahnen (14, 15) von Filtermaterial und durch die Zwischenlagebahn (18) hindurch erfolgt und in aufeinanderfolgenden Schweißvorgängen abwechselnd zwischen die Zwischenlagebahn (18) und die eine bzw. die andere Bahn (14 bzw. 15) von Filtermaterial jeweils eine nicht verschweißbare Trennplatte (20 bzw. 22) eingeschoben wird.

7. Verfahren nach Anspruch 6, **dadurch gekennzeichnet, daß** die beiden Trennplatten als quer zur Bahnlängsrichtung verlaufende Trennstreifen (20, 22) ausgeführt sind, die abwechselnd in Bahnlaufrichtung in den Schweißbereich und in entgegengesetzter Richtung aus diesem herausbewegt werden.

8. Verfahren nach Anspruch 6, **dadurch gekennzeichnet, daß** die beiden Trennplatten (20, 22) beim Verschweißen der Seitenränder (4, 5) in einer aus dem Schweißbereich zurückgezogenen Stellung verbleiben.

9. Verfahren nach Anspruch 6, **dadurch gekennzeichnet, daß** die beiden Bahnen (14, 15) von Filtermaterial und die Zwischenlagebahn (18) in gesteuerten Vorschubschritten einer Schweißstation (16) zugeführt werden, in der mindestens ein sich quer zur Bahnlängsrichtung erstreckender Ultraschall-Schweißkopf (17, 17') gegenüber einer Schweißgegenfläche (19) angeordnet ist.

10. Verfahren nach Anspruch 9, **dadurch gekennzeichnet, daß** in der Schweißstation (16) mehrere, in Bahnquerrichtung nebeneinander angeordnete Schweißköpfe (17, 17') gesondert ansteuerbar sind.

## Claims

1. Filter bag (1) for pocket air filters, comprising two side walls (2, 3) which are welded together along their two lateral edges (4, 5) and their base edge (6), said side walls being made of air-permeable filter material, which can be ultrasonically welded, and which are connected at least on one part of their surface by welded spacer elements running essentially parallel to the side walls (2, 3), **characterised in that** the spacer elements are formed by an intermediate layer (7) comprising a flexible material web, said intermediate layer being alternately welded to one of the two side walls (2 or 3).

2. Filter bag according to claim 1, **characterised in that** the intermediate layer (7) is alternately connected to one or other side wall (2 or 3) at ultrasonically produced welds (8 or 9), which essentially run parallel to the lateral edges (4, 5).

3. Filter bag according to claim 1, **characterised in that** the intermediate layer (7) is welded to the two lateral edges (4, 5) of the two side walls (2, 3).

4. Filter bag according to claim 2, **characterised in that** adjacent welds (8, 9) of the intermediate layer (7) are arranged at an equal distance (t) from each other.

5. Filter bag according to claim 1, **characterised in that** the intermediate layer (7) is positioned at a distance from the base edge (6) and that the two side walls (2, 3) are directly connected in the area between the base edge (6) and the intermediate layer (17) by welds (10) which essentially run parallel to the lateral edges (4, 5).

6. Process for the manufacture of filter bags according to any of the claims 1 to 5, where two layers of filter material are welded together by ultrasound along their two lateral edges (4, 5) and a base edge (6), and are welded by ultrasound to spacer elements located in between, **characterised in that** two continuously fed webs (14, 15) of filter material are alternately welded along successive welds (8, 9) running across the longitudinal direction of the web, to a continuously fed intermediate layer web (18) in between, where the ultrasonic welding takes place in each case through the two webs (14,15) of filter material and through the intermediate layer web (18) and in successive welding processes a non-weldable separating plate (20 or 22) is alternately inserted between the intermediate layer web (18) and one or other web (14 or 15) of filter material.

7. Process according to claim 6, **characterised in that** the two separating plates are designed as separating strips (20, 22) which run across the longitudinal direction of the web and which are alternately moved in the running direction of the web into the welding area and out of it, in the opposite direction.

8. Process according to claim 6, **characterised in that** the two separating plates (20, 22) remain retracted outside the welding area when the lateral edges (4, 5) are being welded.

9. Process according to claim 6, **characterised in that** the two webs (14, 15) of filter material and the intermediate layer web (18) is fed in controlled feed steps to a welding station (16) in which is positioned at least one ultrasonic welding head (17, 17') extending across the longitudinal direction of the web and opposite a welding counter-surface (19).

10. Process according to claim 9, **characterised in that** there are several separately controllable welding heads (17, 17') in the welding station, located side by side and at an angle to the direction of the web.

## Revendications

1. Sac filtrant (1) pour filtre à air du type à poche, constitué de deux parois latérales (2, 3) soudées l'une à l'autre sur leurs deux bords latéraux (4, 5) et leur bord de fond (6) formées d'un matériau filtrant perméable à l'air et soudable par ultrasons, qui sont reliés les uns aux autres au moins sur une partie de leur surface par des nervures d'espacement soudées et s'étendant en substance parallèlement aux parois latérales (2, 3), **caractérisé en ce que** les nervures d'espacement sont formées par une couche intermédiaire (7) constituée d'une bande de matériau souple, qui est soudée en alternance avec chacune l'une des deux parois latérales (2 ou 3).

2. Sac filtrant selon la revendication 1, **caractérisé en ce que** la couche intermédiaire (7) est reliée à l'une et l'autre parois latérales (2 ou 3) en alternance par des joints de soudage (8 ou 9) s'étendant en substance parallèlement aux bords latéraux (4, 5) et réalisés par soudage par ultrasons.

3. Sac filtrant selon la revendication 1, **caractérisé en ce que** la couche intermédiaire (7) est soudée aux deux bords latéraux (4, 5) des deux parois latérales (2, 3).

4. Sac filtrant selon la revendication 2, **caractérisé en ce que** des joints de soudage voisins (8, 9) de la couche intermédiaire (7) sont agencés à chaque fois à la même distance (t) les uns des autres.

5. Sac filtrant selon la revendication 1, **caractérisé en ce que** la couche intermédiaire (7) est agencée à distance du bord de fond (6) et **en ce que** les deux parois latérales (2, 3) sont reliées directement l'une à l'autre dans la zone comprise entre le bord de fond (6) et la couche intermédiaire (17) par des joints de soudage (10) s'étendant en substance parallèlement aux bords latéraux (4, 5).

6. Procédé de fabrication de sacs filtrants selon l'une quelconque des revendications 1-5, dans lequel deux couches de matériau filtrant sont soudées par ultrasons sur leurs deux bords latéraux (4, 5) et un bord de fond (6) l'une à l'autre et sont soudées par ultrasons à des nervures d'espacement agencées entre elles, **caractérisé en ce que** deux bandes acheminées sans fin (14, 15) de matériau filtrant sont soudées par des joints de soudage successifs (8, 9) qui s'étendent transversalement à la direction longitudinale des bandes (8, 9) en alternance avec une bande de couche intermédiaire (18) acheminée sans fin entre elles, le soudage par ultrasons se fait respectivement à travers les deux bandes (14, 15) de matériau filtrant et à travers la bande de couche intermédiaire (18) et, au cours d'opérations de soudage successives en alternance entre la bande de couche intermédiaire (18) et la ou les autres bandes (14 ou 15) de matériau filtrant est respectivement insérée une plaque de séparation (20 ou 22) qui n'est pas soudable.

7. Procédé selon la revendication 6, **caractérisé en ce que** les deux plaques de séparation se présentent sous la forme de bandes de séparation (20, 22) s'étendant transversalement à la direction longitudinale des bandes, lesdites bandes étant en alternance déplacées dans le sens de déroulement des bandes dans la zone de soudage et hors de celles-ci dans le sens opposé.

8. Procédé selon la revendication 6, **caractérisé en ce que** les deux plaques de séparation (20, 22) restent dans une position retirée de la zone de soudage lors du soudage des bords latéraux (4, 5).

9. Procédé selon la revendication 6, **caractérisé en ce que** les deux bandes (14, 15) de matériau filtrant et la bande de couche intermédiaire (18) sont acheminées par des étapes d'avancement commandées à un poste de soudage (16), dans lequel au moins une tête de soudage par ultrasons (17, 17') s'étendant transversalement à la direction longitudinale des bandes est agencée en regard d'une contre-surface de soudage (19).

10. Procédé selon la revendication 9, **caractérisé en ce que** plusieurs têtes de soudage (17, 17') agencées l'une à côté de l'autre dans la direction transversale aux bandes peuvent être commandées séparément dans le poste de soudage (16).
